# EUROPEAN PATENT APPLICATION

(11) **EP 4 497 551 A1**
(43) Date of publication of application: **29.01.2025**
(21) Application number: 23275113.1
(22) Date of filing: 28.07.2023
(51) Int. Cl.: B25J 9/16, G05B 19/418

(54) **ASSIGNING ROBOTS TO SAFE OPERATING GROUPS**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A computer-implemented method of assigning one or more robots in a workspace to one or more safety zones comprises obtaining a safety boundary wherein the safety boundary defines an area around a robot that needs to be monitored to enable safe operation of the robot; receiving, from each robot of the one or more robots, an indication of a current location of the robot in the workspace; obtaining, for each robot, an itinerary of planned movements of the robot; calculating, for each robot, a restricted area for the robot using the current location of the robot, the itinerary of planned movement of the robot, and the safety boundary; and assigning the one or more robots to a one or more safety zones.

## Description

### FIELD

The present application relates to dynamically assigning one or more robots in a workspace to one or more safety zones to enable safe and efficient operation of the one or more robots.

### BACKGROUND

When operating robots in a workspace it is important that a restricted area around the robot is monitored and if an unexpected item, such as a person, non-human animal or inanimate object, enters the restricted area the robot is stopped to prevent harm to the item or robot. In order to monitor the restricted area, the robot can comprise a scanner. However, in some scenarios the view of the scanner is blocked by an object in the workspace such as a jig or build frame. Therefore, the robot is unable to monitor its entire restricted area and additional scanners are needed to monitor the restricted area. In addition, complications can arise if planned movement of a robot takes it into the restricted area of another robot as in this instance it is not desirable to stop both robots for the expected activity. It is potentially possible to overcome this by grouping all robots in the workspace and having them share scanners and treating the entire workspace as a restricted area. However, this means an operator is unable to perform actions in a section of the workspace without disrupting all robots.

It would therefore be beneficial to have a way of dynamically grouping robots that enable them to have a shared restricted area while ensuring the groupings are not so large that an operator cannot enter the workspace to service robots or perform activities without disrupting all robots in the workspace.

The embodiments described below are not limited to implementations which solve any or all of the disadvantages of known ways of operating robots with restricted areas.

### SUMMARY

According to an aspect of the present disclosure, there is provided a computer-implemented method of grouping a plurality of robots in a workspace into safety zones. The method comprises obtaining a safety boundary wherein the safety boundary defines an area around a robot that needs to be monitored to enable safe operation of the robot; obtaining, for each robot of the plurality of robots in the workspace, an indication of a current location of the robot in the workspace; obtaining, for each robot of the plurality of robots in the workspace, an itinerary of planned movements of the robot; and calculating, for each robot of the plurality of robots in the workspace, a restricted area for the robot using the current location of the robot, the itinerary of planned movement of the robot, and the safety boundary. The method further comprises grouping the plurality of robots into a plurality of safety zones, such that: each robot in a safety zone comprising at least one other robot either has a current location within the restricted area of a robot in the safety zone or enters the restricted area of a robot in the safety zone when following its itinerary of planned movement; and any robot that has a current location within a restricted area of another robot or which enters the restricted area of another robot when followings its itinerary of planned movement is grouped in the same safety zone as the another robot.

According to another aspect of the present disclosure there is provided a computer-implemented method of assigning one or more robots in a workspace to one or more safety zones. The method comprises obtaining a safety boundary, wherein the safety boundary defines an area around a robot that needs to be monitored to enable safe operation of the robot; obtaining, for each robot of the one or more robots in the workspace, an indication of a current location of the robot in the workspace; obtaining, for each robot of the one or more robots in the workspace, an itinerary of planned movements of the robot; and calculating, for each robot of the one or more robots in the workspace, a restricted area for the robot using the current location of the robot, the itinerary of planned movement of the robot, and the safety boundary. The method further comprises assigning the one or more robots to one or more safety zones, such that: each robot in a safety zone comprising at least one other robot either has a current location within the restricted area of a robot in the safety zone or enters the restricted area of a robot in the safety zone when following its itinerary of planned movement; and any robot that has a current location within a restricted area of another robot or which enters the restricted area of another robot when followings its itinerary of planned movement is grouped in the same safety zone as the another robot.

Once the robots of the one or more robots or plurality of robots have been assigned or grouped into safety zones, the robots can be operated in accordance with their itinerary of planned movements.

The two aspects above provide a flexible method for grouping or assigning robots into safety zones that enables a workspace to be efficiently setup or amended as robots are added to the workspace or the safety boundaries of the robots change. This also provides an efficient technique for setting up workspaces with different safety requirements and in different environments. In addition, the above method ensures the robots are not over-grouped in that too many robots are placed in a single safety zone. Over-grouping the robots can lead to overly large safety zones which would make it impractical for a user/operator to service the workplace as too many robots would be taken out of action when the user/operator entered the safety zone.

In some examples, the one or more robots are grouped such that: a robot which neither has a current location within a restricted area of any other robot nor enters the restricted area of any other robot when following its itinerary of planned movement is assigned to an individual safety zone. If a robot is unlikely to impact the operation of any other robot it can be placed in its own individual safety zone. This further ensures that robots are not over-grouped.

In some examples, where the one or more robots comprise a plurality of robots and the one or more safety zones comprise a plurality of safety zones, a first safety zone of the one or more safety zones can overlap with an area covered by a second safety zone of the one or more safety zones. Allowing an overlap area without combining the safety zones ensures that each safety zone is as large as required without over-grouping the robots.

In some examples, the method further comprises for at least one safety zone of the one or more safety zones: operating the one or more robots in the safety zone in accordance with their respective itinerary of planned movements; during operation of the one or more robots in the safety zone, determining whether an object enters the safety zone; and in response to determining an object has entered the safety zone, stopping operation of all of the one or more robots in the safety zone. Thus the safety zones determined above can be used to ensure safe operation of the robots by shutting down or stopping operation of the robots if an obstacle or person enters the safety zone. The at one safety zone may comprise each safety zone of the one or more safety zones.

In the above example, determining whether an object enters the safety zone can comprise using one or more scanners to scan the safety zone to determine any objects in the safety zone. This provides a convenient method for determining when an object enters a safety zone. In the above example, determining whether an object enters the safety zone can additionally or alternatively comprise operating a light curtain around an edge of the safety zone; and determining an object has entered the safety zone if the object crosses the light curtain. This provides another way for determining when an object enters a safety zone. In addition, combining the techniques can provide extra assurances as to whether an object has entered a safety zone.

In some examples, the method further comprises for at least one safety zone of the one or more of safety zones: determining, using the restricted area for each robot in the safety zone, a total area of the safety zone; determining any scanners present within the total area of the safety zone, wherein the scanners are configured to scan the workspace; determining, for each scanner in the total area of the safety zone, a detectable scanning area for the scanner, wherein the detectable scanning area takes into account any objects in the workspace restricting the detectable scanning area of the scanner; determining, using the detectable scanning area for each scanner, a total area detectable by all the scanners in the safety zone; comparing the total area detectable to the total area of the safety zone; and in response to the total area detectable not covering the entire area of the safety zone, providing a warning that the safety zone is insufficiently served by scanners. This provides a warning when a safety zone is not sufficiently monitored to enable operation of robots in that safety zone. Thus, this enhances safety by ensuring robots are not operated in safety zones that are insufficiently served by scanners to enable monitoring of the entire safety zone. The at one safety zone may comprise each safety zone of the one or more safety zones.

In the above example, the method may further comprise in response to the total area detectable covering at least the entire area of the safety zone, confirming the assigning of the one or more robots in the safety zone to the safety zone. In such an example, the safety zone can be considered adequately covered by scanners to determine when an object enters the safety zone. As such, operation of robots in the safety zone can be allowed. In addition or as an alternative, the method may further comprise in response to the total area detectable not covering the entire area of the safety zone: using the area of the safety zone and the total area detectable determining an undetectable area that is not detectable by any of the scanners in the safety zone; determining based on the undetectable area suggestions on how additional scanners should be positioned in the safety zone to ensure the entire area of the safety zone is detectable by a scanner; and providing an output containing the suggestions as to how additional scanners should be positioned. This provides the user with an indication about how to adapt a workspace to ensure a safety zone is adequately covered by scanners. This enables a safety zone that would otherwise not be monitored adequately for safe operation to be adapted, by the addition of scanners, to allow the safe operation of the robots.

Determining, using the restricted area for each robot in the safety zone, a total area of the safety zone may comprise using polygon clipping to add the restricted area for each robot in the safety zone to obtain the total area for the safety zone. Determining, using the detectable scanning area for each scanner, a total area detectable by all the scanners in the safety zone may comprise using polygon clipping to add the detectable scanning area for each scanner in the safety zone to obtain the total area detectable by all scanners in the safety zone. Comparing the total area detectable to the total area of the safety zone may comprise using polygon clipping to determine if any part of the total area of the safety zone is outside of the total area detectable. Polygon clipping provides a useful way for adding and subtracting areas which enables different areas to be compared relatively easily.

In some examples the current location of the robot in the workspace is a location of the robot relative to an object in the workspace wherein the object in the workspace has a known position. This provides a way for a robot to easily identify its current location.

In some examples, the indication of the current location of the robot is a first indication of a current location of the robot, and the method further comprises: receiving, from each robot of the one or more robots, a second indication of the current location of the robot; and for each robot of the one or more robots: comparing, the location from the second indication of the current location with the location from the first indication of the current location; and in response to the location from the second indication being different from the location from the first indication, providing an indication that there is an error in the positioning of the robot. Flagging up location or positioning errors for the robot reduces the risk of accidents that may occur if a robot incorrectly reports its location. Receiving two indications of location enable detection of such errors by comparing the two indications of location.

In the above example, the method may further comprise in response to the location from the second indication not being different from the location from the first indication confirming the robot is correctly positioned. This allows the two indications of location to be used to confirm the location of the robots. In addition or as an alternative, the method may further comprise determining, by each robot of the one or more robots, the current location of the robot by scanning a QR code on a floor grid, wherein the robot is positioned on the floor grid; and providing the current location obtained from the QR code on the floor grid as the second indication of the location. This provides a convenient and easy way for a robot to provide a second indication of its location.

In some examples, the method further comprises in response to a change in the workspace: obtaining, for each robot of the one or more robots in the workspace, a third indication of a current location of the robot in the workspace; obtaining, for each robot of the one or more robots in the workspace, an itinerary of planned movements of the robot; for each robot re-calculating a restricted area for the robot using the current location of the robot, the itinerary of planned movement of the robot, and the safety boundary; and re-assigning the one or more robots into one or more safety zones such: each robot in a safety zone comprising at least one other robot either has a current location within the restricted area of a robot in the safety zone or enters the restricted area of a robot in the safety zone when following its itinerary of planned movement; and any robot that has a current location within a restricted area of another robot or which enters the restricted area of another robot when followings its itinerary of planned movement is grouped in the same safety zone as the another robot. Thus, the method for grouping robots can be performed dynamically and the robots can be regrouped when the workspace is changed. This simplifies the process of adding or removing robots or changing safety boundaries by enabling the safety zones to be recalculated. In these examples the change in the workspace may comprise at least one of: a new robot being added to the workspace; a robot being removed from the workspace; a robot being moved within the workspace; an object being added to the workspace; an object being removed from the workspace; an object being moved within the workspace; and a change in safety boundary for one or more robots of the one or more robots. Thus, the method can be used dynamically to adjust the grouping of robots in response to a wide variety of changes in the workspace.

In some examples, the safety boundary is a predefined value that is the same for each robot of the one or more robots. In other examples a safety boundary comprises obtaining the safety boundary for each robot of the one or more robots and the size of the safety boundary can differ between robots. Thus, the above methods can work both when the safety boundary is the same for all robots or varies between robots. This ensures the above methods are flexible for different forms of safety boundary.

In some examples, the method further comprises determining, using the current location of each robot and the itinerary of planned movements for each robot whether any robots will collide if each robot of the one or more robots follows the itinerary of planned movements for the respective robot; and in response to determining two or more robots will collide if each robot of the one or more robots follows the itinerary of planned movements for the respective robot, providing an error message indicating which robots will collide if the itinerary of planned movements for each robot is followed. Thus, the above method can also be used to determine if robots within the workspace will collide with each other if operating correctly and provide a warning that can prevent such collisions. This can both enhance safety and reduce the risk of damage to the robots.

According to another aspect of the present disclosure, there is provided a computer device comprising a processor; and a memory, the memory containing computer readable instructions that when implemented by the processor cause the processor to perform a method as described in any of the examples above.

According to an aspect of the present disclosure, there is provided a non-transitory computer readable storage medium containing instructions that when implemented by a processor cause the processor to perform a method according to any of the examples above.

According to an aspect of the present disclosure, there is provided a robot assembly system comprising: one or more robots in a workspace, wherein each robot of the plurality of robots is configured to send, to a robot control computer, an indication of a current location of the robot in the workspace in response to a location request received from the robot control computer; and the robot control computer, wherein the robot control computer comprises: a processor; and a memory, the memory containing computer implementable instructions that when implemented by the processor cause the processor to perform a method accord to any of the example methods described above. In this aspect, the robot assembly may further comprise a one or more scanners within the workspace, wherein each scanner of the one or more scanners is configured to scan the workspace.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc and do not include propagated signals. The software can be suitable for execution on a parallel processor or a serial processor such that the method steps may be carried out in any suitable order, or simultaneously.

This acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The preferred features may be combined as appropriate, as would be apparent to a skilled person, and may be combined with any of the aspects of the disclosure.

### BRIEF DESCRIPTION OF THE FIGURES

Embodiments of the disclosure will now be described by way of example only with reference to the figures, in which:
Figure 1 is a flowchart showing a method for assigning one or more robots to one or more safety zones;
Figure 2 shows a workspace comprising robots assigned to one or more safety zones; and
Figure 3 shows the current location, planned movement and restricted zone of a robot;
Figure 4 shows a workspace comprising robots assigned to one or more safety zones wherein the planned movement and restricted zones of each robot are shown;
Figure 5 is a flowchart showing a method for using the one or more safety zones obtained in Figure 1;
Figure 6 is a flowchart showing a method for confirming that the one or more safety zones are adequately monitored for safety; and
Figure 7 is an example computing device that can be used to implement the methods disclosed herein.

### DETAILED DESCRIPTION

Embodiments are described below by way of example only. The description sets forth the functions of the example and the sequence of steps for constructing and operating the example. However, the same or equivalent functions and sequences may be accomplished by different examples.

This application relates to dynamically assigning one or more robots in a workspace to one or more safe operating groups known as safety zones or spans of control to enable efficient and safe operation of the plurality of robots. When the one or more robots comprise a plurality of robots the dynamically assigning the one or more robots can be considered a grouping of the one or more robots.

A robot in a robot system, such as a robot assembly system being used, for example, for vehicle manufacture such as aircraft manufacture has a restricted area. The restricted area is an area around the robot which the computing device controlling the robot needs to monitor to ensure the robot can be operated safely. If an unexpected object enters the restricted area, then the computing device controlling the robot stops movement of the robot. In some examples, the unexpected object can comprise a human or other animal that has unexpectedly entered the workspace of the robot assembly system. Stopping the robot in this instance prevents safety risks to the human or animal. In other examples, the unexpected object may alternatively comprise another robot that is not expected to enter the restricted area or another object that has otherwise moved or otherwise been moved into the restricted area. Stopping the robot in this instance reduces the risk of harm to the robot or the object that has entered the restricted area.

In order to operate a robot system efficiently, robots that enter each other's restricted area are grouped into a shared safety zone or span of control. A restricted area can then be found for all robots in the safety zone or span of control. If an unexpected object enters this restricted area, then all robots within the safety zone or span of control can be stopped. This prevents the need to stop a first robot when a second robot operating in accordance with its expected program enters the restricted area of the first robot. This also stops movement of nearby robots when an unexpected object enters the restricted area of a first robot. Grouping the robots such that robots that enter each other's restricted area are grouped into a shared safety zone or span of control also avoids over-grouping the robots by, for example, placing all the robots in a single safety zone. This aids users/operators who may wish to service the robots as only robots in the safety zones they enter need to be stopped, allowing other robots to continue operating while a robot is being service.

In addition, as mentioned above, a computing device controlling a robot may monitor the restricted area of the robot. To this end, each robot may comprise a scanner. However, if the robot system also comprises other objects, for example jigs or vehicle build frames, these can impact the area which a scanner on a robot is able to successfully scan. By grouping the robots into safety zones or spans of control the robots in a single safety zone or span of control can share scanners. This reduces the need to add extra scanners to the robot system to ensure that the robots can monitor their restricted areas or spans of control.

In the present application the one or more robots and/or plurality of robots in a robot system are dynamically assigned or grouped into safety zones or spans of control based on the current positioning of the robots and planned movements of the robot, wherein the planned movements of the robots may be obtained from instructions or programs that the computing device controlling the robots uses to control the movements of the robot. This provides an easy way of grouping robots that ensures safety requirements are met while preventing each safety zone or span of control becoming overly large and thus impacting too many other robots in the system. This reduces the risk of all robots within a workspace being placed in the same safety zone, something which would prevent an operator or user performing actions in one section of a workspace while robots were operating a second part of the workspace. This also enables a new robot system to be set up efficiently in a new environment taking into account any environmental constraints or safety constraints specific to that environment.

The dynamic assigning or grouping of robots into safety zones or spans of control described in the present application also enables a robot system to be adapted as robots are added to or removed from the robot system. For example, a new robot being added to the system may result in two previously unconnected safety zones being combined into a single safety zone, while the removal of a robot may, in some examples, result in the separation of safety zones due to changes in how robots interact with each other's restricted areas. Furthermore, if there are any changes in a robot's restricted area e.g. due to changes in regulations or the tasks performed by the robot, the dynamic grouping/assigning of the present application enables the robots in the system to be grouped, assigned, re-assigned or regrouped into safety zones taking into account the new requirements in the robot's restricted area.

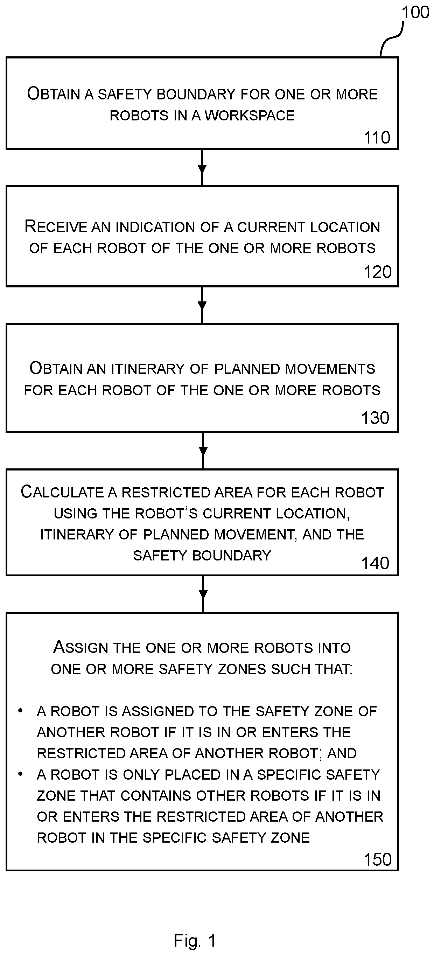

Figure 1 is a flowchart defining a computer-implemented method 100 of assigning or grouping one or more robots or a plurality of robots in a workspace into safety zones. Each safety zone can also be referred to as a span of control, a robot grouping, a group or robots, a control group etc. The method can be performed by a computing device comprising a processor and computer-implemented instructions, stored in a memory, that when executed cause the processor to implement the method. The computing device can comprise a robot control computer configured to implement the method. The robot control computer can also be known as a controller, robot controller or control system computer etc.

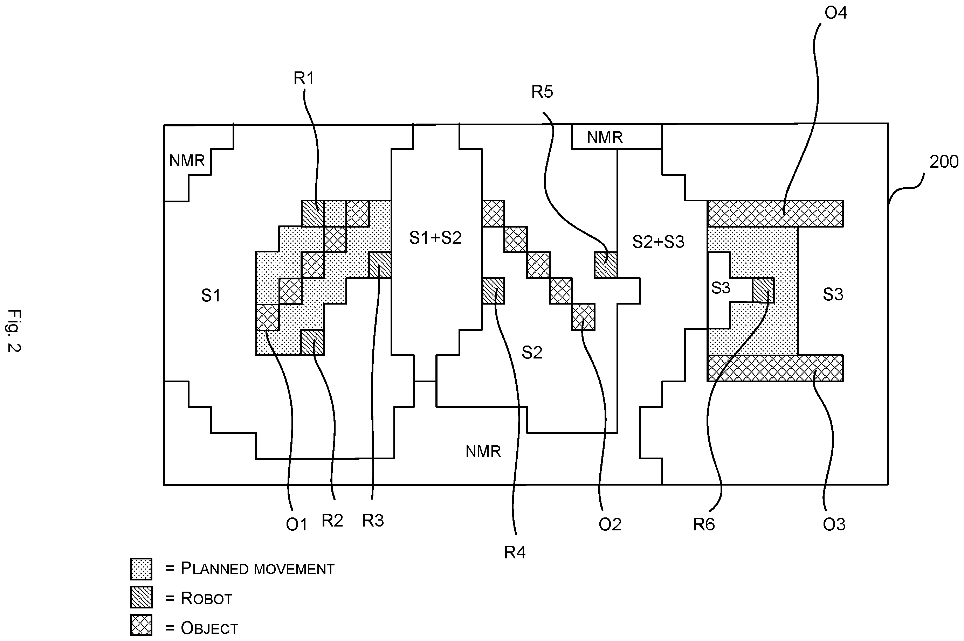

Figure 2 shows a plurality of robots R1-R6 in a workspace 200 of a robot system. The plurality of robots R1- R6 are grouped into three safety zones S1, S2 and S3 in accordance with the method 100 shown in Figure 1. The workspace 200 of the robot system further includes other objects O1-O4 which may for example comprise jigs or part of a vehicle build frame. The areas in which safety zones overlap are labelled as S1+S2 when safety zone S1 and safety zone S2 overlap and S2+S3 when safety zone S2 and safety zone S2 overlap. Some areas of the workspace 200 are not covered by a safety zone S1, S2, S3 since these areas are areas that are deemed to not require monitoring by the method when the itinerary of movements of the robots R1-R6 are considered. These areas are labelled as NMR (no monitoring required). The skilled person would understand that while Figure 2 shows six robots and three safety zones this is merely an example and any number of robots e.g. one or more robots can be used. Similarly, any number of safety zones e.g. one or more safety zones can be used. In some examples there are a plurality of robots R1-R6 and a plurality of safety zones S1, S2 and S3.

In stage 110, the method 100 comprises obtaining a safety boundary for the plurality of (or one or more) robots R1-R6 in the workspace 200. In some examples there may be only a single robot in the workspace. The safety boundary can also be known as a safety radius, safety perimeter, robot boundary etc. The safety boundary defines an area around a robot R1-R6 that needs to be monitored to enable safe operation of the robot R-R6. The safety boundary therefore provides a representation of the area around a robot R1-R6 that needs to be monitored by one or more scanners or other object detection systems to ensure that if an unexpected object enters this area the robot R-R6 can be stopped. The safety boundary can represent the area in any suitable way, for example the safety boundary can comprise a minimum distance from a robot R1-R6 that needs to be monitored in order to enable safe operation of the robot R1-R6. The minimum distance can, for example comprise a radius or other suitable representation of distance. In other examples the safety boundary can comprise an area, diameter or perimeter and the robot R1-R6 can then be considered to be centred within the area, diameter or perimeter.

In some examples, the safety boundary can be the same for each robot R1-R6 in the workspace 200 and can be fixed. The safety boundary can thus be obtained from the memory of the robot control computer or another central database. In other examples, the safety boundary can potentially vary between the robots R1-R6 and obtaining the safety boundary can comprise obtaining the safety boundary for each robot R1-R6 from the respective robot R1-R6 or from a memory of the robot control computer or another central database.

At stage 120, the method comprises receiving an indication of a current location of each robot R1-R6 of the plurality of (or one or more) robots R1-R6 in the workspace 200. The location of the robot R1-R6 is a location of the robot R1-R6 within the workspace 200. In other words, the indication of location of the robot R1-R6 is an indication as to where in the workspace 200 the robot R1-R6 is located. In some examples the location of each robot R1-R6 can be received from the robot R1-R6 itself. However, in other examples, the location of the robot R1-R6 may be sensed by a separate system to the robot R1-R6 such as by a camera or scanner that is separate from the robot R1-R6. In some examples as well as obtaining a location of the robot, stage 120 can further comprise obtaining an orientation of the robot R1-R6. Hence, the position and orientation of the robot R1-R6 can be obtained. The orientation of the robot R1-R6 can refer to the direction in which the robot R1-R6 is pointing so can refer to a direction in which the robot R1-R6 is facing or an angular position of the robot R1-R6 given its location. Using both location and orientation allows the position of the robot R1-R6 to be obtained within 6 degrees of freedom.

The location (and in some examples orientation) of the robot R1-R6 can be obtained and expressed in any suitable way. In one example, the location of the robot R1-R6 can be a location relative to a nearby object O1-O4 in the workspace 200. The method can then comprise using the location of the robot R1-R6 relative to the nearby object O1-O4 to determine how the robot R1-R6 is positioned within the workspace 200. The orientation of the robot R1-R6 can be obtained based on the orientation of the robot R1-R6 relative to the object O1-O4. The object O1-O4 can be an object such as a jig or build frame that is used during the manufacturing process being performed by the robot R1-R6. Alternatively, the object O1-O4 can be a reference object that is positioned in the workspace 200 to enable the location of robots R1-R6 to be determined. In some examples, the location of the robot R1-R6 relative to an object O1-O4 can be obtained by a scanner on the robot R1-R6 which detects the object O1-O4 and determines a direction and distance between the robot R1-R6 and the object O1-O4. This scanner may also obtain the orientation of the robot R1-R6 when this information is being used. The robot R1-R6 then provides this as the indication of a current location, and in some examples, orientation. In other examples, the location of the robot R1-R6 relative to the object O1-O4 can be obtained by an external camera or sensor which senses the location of both the object O1-O4 and the robot R1-R6. This external camera or sensor can also obtain the orientation of the robot R1-R6 relative to the object O1-O4.

In other examples, instead of being a location of the robot R1-R6 relative to a nearby object O1-O4, the location of the robot could be provided by for example a GPS system or other location system providing coordinates that represent a position, and in some cases, an orientation of the robot R1-R6. In yet further examples, the workspace 200 could provide a floor grid that has barcodes, QR codes or another suitable code positioned at regularly intervals. The robot R1-R6 could then scan a nearest barcode, QR code or other suitable code and use this to establish its location, and in some examples, orientation relative to the floor grid. This location, and in some examples, orientation can then be provided as the indication of location of the robot R1-R6. In yet other examples, the location, and in some examples, orientation, of the robot can be determined using any suitable vision system or scanner. For example, a vision system or scanner can be used to determine the location and, in some cases, orientation of the robot relative to a known object or point in space.

At stage 130, the method comprises obtaining an itinerary of planned movements of each robot R1-R6 of the plurality of (or one or more) robots R1-R6. The itinerary of planned movements can comprise a program or list of instructions that indicate how the robot R1-R6 should move in order to perform its function as part of the robot assembly/manufacturing process. The itinerary of planned movements may have been determined automatically from a computer aided design program or entered by a user through a computer aided design program or otherwise. The itinerary of planned movements indicates how a robot R1-R6 will move within the workspace 200 when it is being used, for example, for vehicle manufacture. The itinerary of planned movements may be stored in a memory of the robot control computer implementing the method 100 of grouping robots R1-R6. Alternatively, the itinerary of planned movements can be obtained from a computer numerical controller or machine control panel for the robot R1-R6 that will be used to control the robot R1-R6. The itinerary of planned movements enables the robot control computer to anticipate how the robot R1-R6 will move during a certain time period for which the plurality of (or one or more) robots R1-R6 are to be grouped and/or assigned to one or more safety zone S1-S3.

The skilled person would understand that stages 110, 120 and 130 above can occur in any order or even occur simultaneously/concurrently provided that the necessary information is obtained from each stage.

Once the safety boundary, indications of current location and itineraries of planned movements have been obtained, the method can move on to stage 140 which comprises using these to calculate a restricted area for each robot R1-R6.

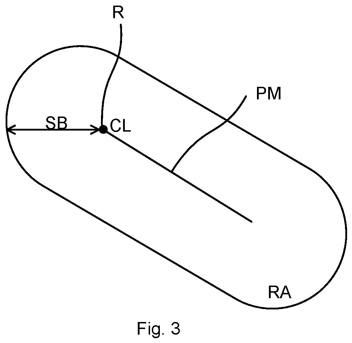

Figure 3 illustrates an example of how a restricted area RA can be calculated for a robot R. In this example, the current location of robot R is given by CL and the robot R moves in accordance with an itinerary of planned movements represented by line PM. The safety boundary SB is either provided as a minimum distance from the robot R that needs to be monitored or, if provided in the form of an area, is used to determine a minimum distance that needs to be monitored. To calculate the restricted area RA the current location CL of the robot R and the itinerary of planned movements PM of the robot R can be used to determine positions of the robot R for the time period during which the itinerary of planned movements will take place. The restricted area RA can then be determined by forming an area that is the minimum distance from the robot R for all positions of the robot R for the time period during which the itinerary of planned movements will take place given the positions of the robot R in this time period. This provides a restricted area RA that acts as a safety bound for the robot R during its operation.

Other techniques for determining the restricted area could also be used. For example, the safety boundary could be provided in the form of an area and polygon clipping or any other suitable process could be used to add the area for each position of the robot R1-R6 during the itinerary of planned movements. Any other suitable technique for determining the restricted area could be used as appropriate.

Once the restricted area has been calculated for each robot R1-R6, the method comprises in stage 150 grouping the robots from the plurality of robots R1-R6 into safety zones and/or assigning the one or more robots R1-R6 to one or more safety zones.

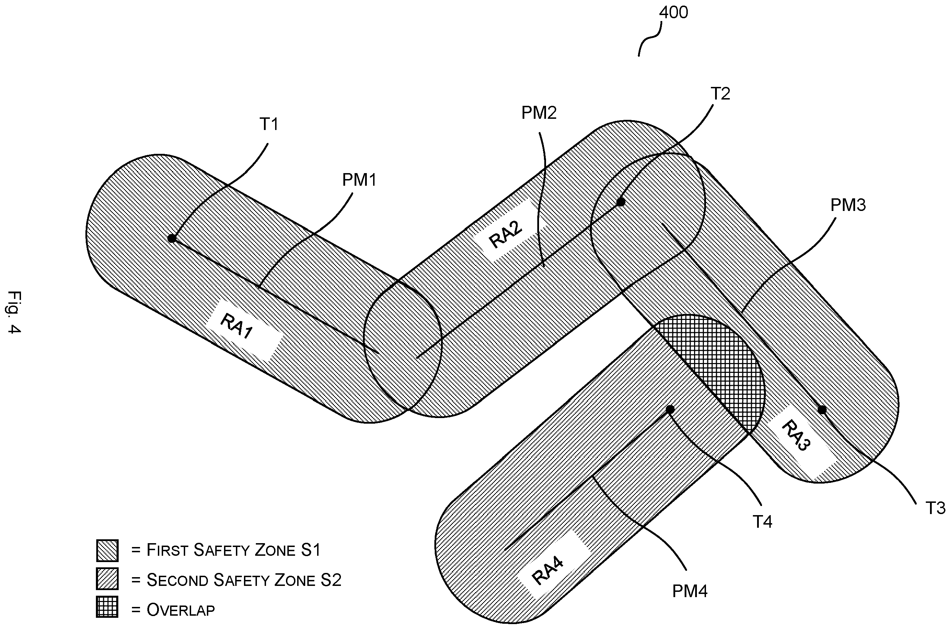

An example grouping is shown in Figure 4. While this example grouping shows four robots T1-T4, the skilled person would understand this is purely exemplary and another number of robots R1-R6 could be used. In addition, the specific groupings shown in Figure 4 are purely exemplary and designed to illustrate certain grouping principals. Other groupings and arrangements of robots R1-R6 could also be used.

Grouping 150 the robots R1-R6 into a plurality of safety zones S1, S2 or assigning the robots R1-R6 to one or more safety zones S1, S2 comprises grouping/assigning 150 the robots R1-R6 such that if a first robot T1 is either in or enters the restricted area RA2 of another robot T2 when the robots are all following their itineraries of planned movements the first robot T1 and the other robot T2 are grouped in the same safety zone S1. In other words, if any robot T1, T3 is in the restricted area RA2 of another robot T2 or the movement of any robot T1, T3 takes it into the restricted area RA2 of another robot T2, the two robots T1, T3 and T2 are grouped in the same safety zone S1. In addition, if a robot T4 is not in the restricted area RA1, RA2, RA3, of any robots T1, T2, T3 within a safety zone S1 and does not enter the restricted area RA1, RA2, RA3, of any robots T1, T2, T3 within a safety zone S1 during the itinerary of planned movements, the robot T4 is not grouped in that safety zone S1 if the safety zone S1 contains other robots. In other words, a robot T1-T3 is only grouped in a safety zone S1 containing other robots if it is either in the restricted area RA1-RA3 of at least one of the other robots T1-T3 in that safety zone S1 or enters the restricted area RA1-RA3 of at least one of the other robots T1-T3 in that safety zone S1 during the itinerary of planned movement. The skilled person would understand that a robot T3 does not have to enter the restricted area RA1, RA2 of all robots T1, T2 within a safety zone S1 to be placed in that safety zone since a first robot T1 and a third robot T3 could both be in or enter the restricted area RA2 of a second robot T2 but not enter each other's restricted area RA1, RA2. In addition, the skilled person would understand that a robot T4 may not be in or enter the restricted area RA1, RA2, RA3 of any other robot T1, T2, or T3. In this case the robot T4 will be placed in its own safety zone S2. The skilled person would also understand that since the restricted areas RA1-RA4 of robots T1-T4 covers an area beyond merely the positions of the robots T1-T4, the restricted area RA4 of a robot T4 could overlap with the restricted area RA3 of another robot T3 without the robot T4 being in or entering the restricted area RA3 of the other robot T3 and thus being grouped in the same safety zone. This means that the area covered by safety zones S1, S2 can overlap.

The skilled person would also understand that not all areas of a workspace 200 require monitoring. Some areas may not contain the restricted area of any robots R1-R6. Thus, these areas do not need to be included in any safety zone S1-S3. These areas can be referred to as no monitoring required (NMR) areas and are shown in Figure 2.

In the example shown in Figure 4 there are four robots T1, T2, T3 and T4 in a workspace 400. In the example shown in Figure 4, based on the itineraries of planned movements robot T1 will move according to planned movement PM1, robot T2 will move according to planned movement PM2, robot T3 will move according to planned movement PM3 and robot T4 will move according to planned movement PM4. As such, robot T1 has restricted area RA1, robot T2 restricted area RA2, robot T3 restricted area RA3 and robot T4 restricted area RA4. In terms of grouping into safety zones S1, S2, as robot T1 enters the restricted area RA2 of robot T2 during the itinerary of planned movement of robot T1, robot T1 and T2 are grouped in the same safety zone S1. In addition, since robot T3 enters the restricted area RA2 of robot T2 during its planned movement PM3 in accordance with its itinerary of planned movements, robot T3 is also placed in the same safety zone as robot T2 i.e. safety zone S1. This means robots T1, T2 and T3 are all placed in the same safety zone S1 even though robot T1 does not enter the restricted area RA3 of robot T3 and robot T3 does not enter the restricted area RA1 of robot T1. The workspace 400 also includes robot T4 which moves according to planned movement PM4 as determined by the itinerary of planned movement for robot T4. As can be seen, from Figure 4, in this example, the robot T4 neither starts in the restricted area RA1, RA2, RA3 of any other robot T1, T2, T3 nor enters the restricted area of any other robot T1, T2, T3 during its planned movement PM4. Hence, robot T4 is placed in its own safety zone S2. While robot T4 does not enter the restricted area RA1, RA2, RA3 or any other robot T1, T2, T3, its restricted area RA4 overlaps with the restricted area RA3 of robot T3. This means that the area of safety zones S1 and S2 overlap. Nonetheless no planned movement of robots T1, T2, T3 in safety zone S1 should be detectable in safety zone S2 and vice versa. Hence, safety zones S1 and S2 are not combined and are considered separate safety zones.

Thus, as described above, the robots T1-T4 are grouped/assigned such that each robot in a safety zone S1, S2 comprising at least one other robot either has a current location CL within the restricted area RA1-RA4 or a robot T1-T4 in that safety zone S1, S2 or enters the restricted area RA1-RA4 of a robot T1-T4 in that safety zone S1, S2 when the each robot follows its itinerary of planned movement PM1-PM4. In addition, any robot T1-T4 that has a current location CL within a restricted area RA1-RA4 of another robot T1-T4 or which enters the restricted area of another robot T1-T4 when the any robot is following its itinerary of planned movement PM1-PM4 is grouped in the same safety zone S1, S2 as the another robot T1-T4. A robot T4 which neither has a current location CL within a restricted area RA1-RA3 of any other robot T1-T3 nor enters the restricted area RA1-RA3 of any other robot T1-T3 when follow the robot's R4 itinerary of planned movement PM4 is placed in an individual safety zone S2 containing only that robot T4. As mentioned above, the area covered by a first safety zone S1 can overlap the area covered by a second safety zone S2.

The above method enables robots R1-R6, T1-T4 to be grouped/assigned into safety zones S1, S2, S3 automatically and efficiently. By grouping all robots T1-T3 whose movement PM1-PM3 will take them into each other's restricted areas RA1-RA3 together, the method ensures that all planned movement of robots T1-T3 that will occur in a robot's restricted RA1-RA3 is included in the safety zone S1. This prevents a robot's T1-T3 movements in accordance with an itinerary of planned movements triggering an unexpected object event and causing a shutdown since the robot T1-T3 is already considered to be in the safety zone S1 and is not considered to enter or exit the safety zone S1. In addition, the above method also provides a minimal grouping of robots T1-T3 necessary to achieve this effect. As such, robots T4 that do not enter the restricted area RA1-RA3 of any robot T1-T3 in a safety zone S1 are not placed in that safety zone S1 (unless the safety zone contains no other robots). This means that if a robot's movement is not going to cause it to enter the restricted area of another robot in the safety zone and hence enter the safety zone it is placed in a different safety zone. This ensures that, for example, an engineer can interact with or service robot T4 without entering safety zone S1 and disrupting the functioning of robots T1-T3. Thus, this avoids over-grouping robots T1-T4 which would make it more difficult to service or move other robots T1-T4 in the system without shutting down the entire system.

The above method enables an efficient and dynamic grouping/assigning of robots T1-T3 into safety zones S1, S2, S3. If a change is made to the workspace 200, 400 or a new workspace 200,400 is set up, the robots R1-R6, T1-T4 can easily be grouped, assigned, re-assigned or regrouped in accordance with the above method. For example, when a new workspace 200, 400 is being created, the above method can be used to group/assign robots R1-R6, T1-T4 in accordance with any safety boundaries of the robots R1-R6, T1-T4 wherein the safety boundaries for the robots R1-R6, T1-T4 may be set based on the task of the robot R1-R6, T1-T4 and/or local or other restrictions. In addition, if a new robot R1-R6, T1-T4 is added to or an old robot R1-R6, T1-T4 is removed from a workspace 200, 400, the robots R1-R6, T1-T4 can be regrouped to take this into account. For example, a robot R1-R6, T1-T4 being added to the workspace 200 may result in safety zones being combined if the new robot R1-R6, T1-T4 enters a restricted area of multiple other robots R1-R6, T1-T4. In addition, in some examples, the removal of a robot R1-R6, T1-T4 may result in safety zones being split if the removed robot R1-R6, T1-T4 previously entered the restricted area of multiple other robots R1-R6, T1-T4.

The above method also enables dynamic regrouping/re-assigning of robots R1-R6, T1-T4 if there are any changes to the workspace 200, for example because a safety boundary for a robot R1-R6, T1-T4 changes due to, for example, changes in regulations or changes in the task performed by the robot R1-R6, T1-T4. In such a scenario, the above method can be rerun using the new safety boundaries which can in turn change how robots R1-R6, T1-T4 are grouped into safety zones.

The above method therefore provides a dynamic way of grouping/assigning robots R1-R6, T1-T4 to safety zones wherein the method can take into account different safety requirements (e.g. different safety boundaries) and different numbers and positions of robots R1-R6, T1-T4. This enables easy and efficient setup and adaptation of robot workspaces 200, 400.

In some examples, the safety zones S1, S2 and S3 correspond to spans of control. Hence, all robots T1-T3 within a safety zone S1 can be allocated to a single machine control panel and be considered in the domain of that machine control panel. The robots T1-T3, T4 from different safety zone S1, S2 can be allocated to a different machine control panel. A user or operate can then use the machine control panel to control (either individually or all at once) all of the robots T1-T3, T4 within that safety zone S1, S2 and span of control. In addition, the robots T1-T3, T4 may comprise a light and the light may be illuminated a colour dependent upon the safety zone S1, S2 that the robot T1-T3, T4 is part of. This enables a user or operator to easily determine which robots T1-T3, T4 are part of which safety zone S1, S2 and where applicable, are controlled by which machine control panel. The safety zones S1, S2 can further be marked by floor lighting which can be illuminated the colour associated with the safety zone S1, S2 so a user or operate can easily see the boundaries of each safety zone S1, S2. When safety zones S1, S2 are distinguished by colour, a colour-blind friendly colour palette can be used to distinguish the safety zones S1, S2 clearly for all users.

In some examples, the method can also comprise determining using the current location, and in some cases orientation, of each robot R1-R6 and the itinerary of planned movements for each robot R1-R6 whether any robots will collide if all robots R1-R6 operate in accordance with their planned movements. In response to determining two or more robots R1-R6 will collide if each robot R1-R6 follows its itinerary of planned movements, the method can comprise providing an error message indicating the robots R1-R6 collide and which robots R1-R6 will collide. The method can also comprise preventing running of the robots R1-R6 in accordance with their itinerary of planned movements in any safety zone S1, S2, S3 in which such a collision is detected. This can ensure the robots R1-R6 do not damage each other in use.

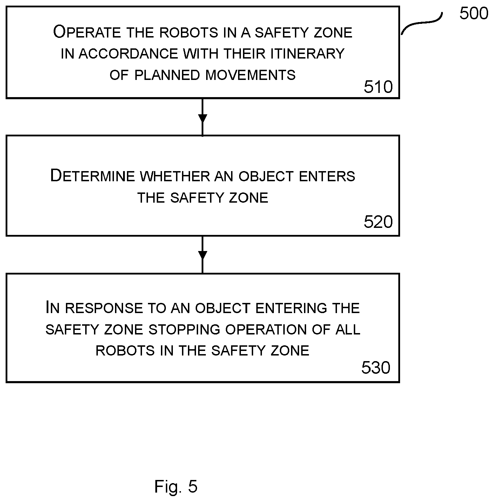

Figure 5 is a flowchart showing a method 500 of using safety zones such as the safety zones found above. As discussed above, safety zones S1, S2, S3 are groups of robots R1-R3, R4-R5, R6 containing one or more robot that operate within a particular zone. Each safety zone S1, S2, S3 has a total area that can be found by summing the restricted areas of each robot R1-R3, R4-R5, R6 within the safety zone S1, S2, S3. Method 500 is a method performed by the robots R1-R3, R4-R5, R6 in use. At stage 510, the robots R1-R3, R4-R5, R6 are run in accordance with a program or schedule that causes them to implement their itinerary of planned movement.

When robots R1-R3, R4-R5, R6 in a safety zone S1, S2, S3 are operating in accordance with their itinerary of planned movements, the method further comprises stage 520 which involves determining whether an object has entered the safety zone S1, S2, S3. In other words the method comprises monitoring the area of the safety zone S1, S2, S3 and determining if an object enters the area of the safety zone S1, S2, S3. The object may comprise a human or other animal that has entered the safety zone S1, S2, S3 either deliberately e.g. to service the robots R1-R3, R4-R5, R6, or accidentally. The object can also comprise another living or inanimate object that enters or is moved into the safety zone S1, S2, S3 either deliberately or accidentally.

In some examples, the determining whether an object enters the safety zone S1, S2, S3 comprises using one or more scanners placed within the safety zone S1, S2, S3 to scan the area of the safety zone S1, S2, S3 and detect any objects entering the safety zone S1, S2, S3. At least some of the one or more scanners can be positioned on the robots R1-R3, R4-R5, R6 within the safety zone S1, S2, S3. In some examples, each robot R1-R3, R4-R5, R6 comprises at least one scanner. In other examples only some robots R1-R3, R4-R5, R6 comprise a scanner. The one or more scanners can as an alternative or in addition be standalone scanners that do not form part of a robot R1-R3, R4-R5, R6. In other examples, the determining whether an object enters the safety zone S1, S2, S3 can comprise as an alternative or in addition to the use of scanners, using a light curtain that surrounds the safety zone S1, S2, S3 to detect when an object enters the safety zone S1, S2, S3. An object can be determined to have entered the safety zone S1, S2, S3 when it crosses, breaches or breaks the light curtain.

At stage 530, the method comprises, in response to determining an object has entered the safety zone S1, S2, S3 stopping movement of all robots R1-R3, R4-R5, R6 within the safety zone S1, S2, S3. As mentioned above, all robot movement in accordance with the itineraries of planned movement has been taken into account when grouping/assigning robots R1-R3, R4-R5, R6 into safety zones S1, S2, S3. Thus no expected robot movement R1-R3, R4-R5, R6 should take a robot R1-R3, R4-R5, R6 into or out of a safety zone S1, S2, S3. Thus, any movement of an object into a safety zone S1, S2, S3 can be considered unexpected movement. Stopping movement of the robots R1-R3, R4-R5, R6 in the safety zone S1, S2, S3 is therefore beneficial for safety as it enables the source of the unexpected movement to be investigated. In addition, if a person or animal accidentally (or deliberately) enters the safety zone S1, S2, S3 this shuts down all robots R1-R3, R4-R5, R6 within the vicinity of the person or animal and thus reduces risk to the person or animal of being harmed by the robots R1-R3, R4-R5, R6. Thus, shutting down or stopping movement of robots R1-R3, R4-R5, R6 if an object enters the safety zone S1, S2, S3 enables use of the safety zones S1, S2, S3.

In some examples, objects other than robots R1-R3, R4-R5, R6 may undergo expected movement. In such scenarios, the method 500 may further comprise comparing the movement of the detected object entering the safety zone S1, S2, S3 to expected movement and only stopping operation of the robots R1-R3, R4-R5, R6 if the movement is unexpected. In other examples, the robots R1-R3, R4-R5, R6 in a safety zone S1, S2, S3 may be shut down or stopped irrespective of whether movement is expected to ensure safety. An alert may then be sent to a user indicated whether the movement is expected or unexpected to enable the user to determine whether to override the shutdown and re-enable movement of the robots R1-R3, R4-R5, R6.

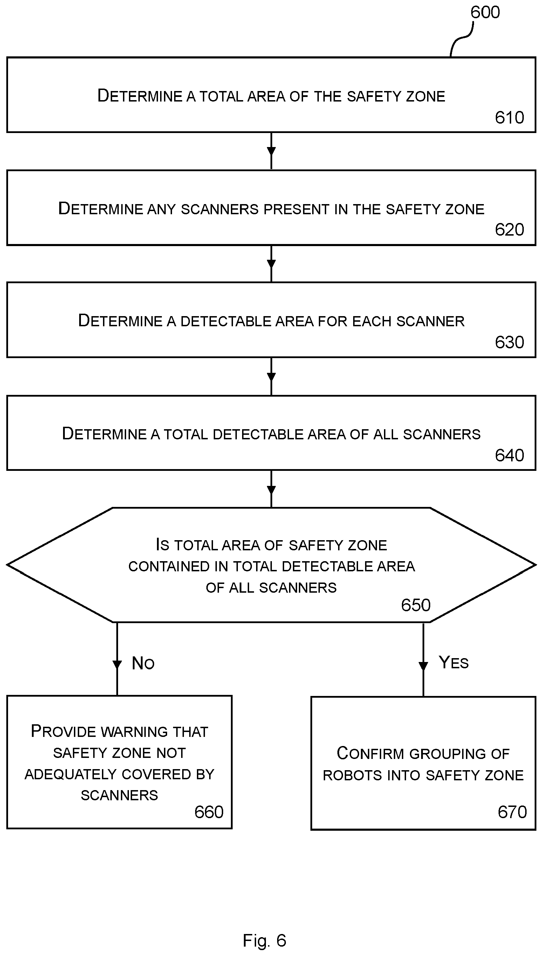

As discussed above, the safety zones S1, S2, S3 can be scanned using one or more scanners that scan the area of the safety zone S1, S2, S3 and determine in an unexpected object has entered the safety zone S1, S2, S3. Figure 6 shows a method that can be performed in these examples to confirm that a safety zone S1, S2, S3 of the one or more safety zones S1, S2, S3 is adequately served by scanners.

At stage 610, the method comprises determining a total area of the safety zone S1, S2, S3 and, in some examples, bounds of the area of the safety zone S1, S2, S3. The total area of the safety zone S1, S2, S3 is determined from the restricted area for each robot in the safety zone S1, S2, S3. This can be done by summing the restricted area for each robot in the safety zone S1, S2, S3, for example, using polygon clipping.

At stage 620, the method comprises determining whether any scanners are present within the total area of the safety zone S1, S2, S3 wherein the scanners are configured to scan the workspace 200, 400 and detect the presence of any objects in the workspace 200, 400. In some examples the scanners can be positioned on the robots R1-R3, R4-R5, R6 and the presence of scanners can be determined based on the robots R1-R3, R4-R5, R6 in the workspace 200, 400. In addition or as an alternative the scanners may be separate from the robots R1-R3, R4-R5, R5 and the position of the scanners determined based on either a known fixed location of the scanners or based on a relative position of the scanner to an object O1-O4 in the workspace 200, 400 detected by the scanner.

At stage 630, the method comprises determining a detectable scanning area for each scanner in the total area of the safety zone S1, S2, S3. This comprises determining a detectable scanning area for the scanner that takes into account any objects O1-O4 in the workspace 200, 400 that restrict the view or detectable area of the scanner. This can be done by having the scanner scan the workspace 200, 400 and provide an indication of its field of view. Alternatively, this can be calculated using the known position of the scanners and objects O1-O4 in the workspace 200, 400. Taking into any objects O1-O4 in the workspace 200, 400 ensures the detectable scanning area for each scanner is a real-world detectable scanning area rather than a theoretical detectable scanning area taken from the range of the scanner.

At stage 640 a total area detectable for all scanners in the safety zone is determined from the detectable scanning area for each scanner. This can comprise adding/summing the detectable scanning areas for each scanner to work out the total area detectable by all of the scanners. This addition/summation can be performed using polygon clipping.

At stage 650, the method comprises comparing the total area detectable to the total area of the safety zone S1, S2, S3. Stage 650 comprises checking whether the total area of the safety zone S1, S2, S3 is contained in the total area detectable of all scanners. Thus, stage 650 comprises determining that the total area detectable encompasses at least all of the total area of the safety zone S1, S2, S3 to ensure that the total area of the safety zone S1, S2, S2 is entirely covered by the total area detectable. The comparing the total area detectable to the total area of the safety zone S1, S2, S3 can comprise using polygon clipping to determine if any part of the total area of the safety zone is outside of the total area detectable for example by using polygon clipping to subtract the total area detectable from the total area of the safety zone.

At stage 660, the method comprises, in response to the total area detectable not covering the entire area of the safety zone S1, S2, S3 providing a warning that the safety zone S1, S2, S3 is not adequately covered by scanners or, in other words, is insufficiently served by scanners. In addition, the method can further comprise not allowing robots R1-R3, R4-R5, R6 in that safety zone to operate since the safety zone S1, S2, S3 cannot be adequately scanned so is not safe.

At stage 670, the method comprises, in response to the total area detectable covering at least the entire area of the safety zone S1, S2, S3 confirming the grouping of the robots R1-R3, R4-R5, R6 into the safety zone S1, S2, S3 and allowing the robots R1-R3, R4-R5, R6 to operate in accordance with their itinerary of planned movements when instructed to by an operator or user.

The method 600 thus comprises ensuring that the safety zones S1, S2, S3 can be effectively and safely used before the robots R1-R3, R4-R5, R6 are enabled to operate. This prevents robots R1-R3, R4-R5, R6 operating in a safety zone S1, S2, S3 that cannot be adequately monitored for excursions into the safety zone S1, S2, S3. This thus enhances safety by ensuring robots R1-R3, R4-R5, R6 that cannot have their restricted areas adequately monitored do not operate.

In some examples, in response to determining the total area detectable does not cover the entire safety zone S1, S2, S3, the method may also comprise providing suggestions as to where additional scanners should be placed to provide adequate coverage to enable operation of that safety zone. In these examples, the method further comprises determining an undetectable area from the area of the safety zone S1, S2, S3 and the total area detectable for example by using polygon clipping to subtract the total area detectable from the total area of the safety zone S1, S2, S3. The method can then comprise determining based on the undetectable area and positioning of the undetectable area potential positions of scanners that would enable the undetectable area to be detected by a scanner. In other words, the method comprises determining suggestions on how additional scanners should be positioned to ensure the entire area of the safety zone S1, S2, S3 is detectable by at least one scanner. The method then comprises providing an output to a user containing these suggestions. For example, the output can comprise an indication as to how the additional scanners should be positioned. The user can then position the new scanners before rerunning the robot grouping process or the safety zone confirmation process from Figure 6 to ensure that the safety zones S1, S2, S3 are now adequately served by scanners and the robots R1-R3, R4-R5, R6 can be allowed to operate in accordance with their itineraries of planned movements on user instruction.

This provides solutions if a safety zone S1, S2, S3 of robots R1-R3, R4-R5, R6 cannot operate because of inadequate coverage by scanners.

As mentioned above, the method of Figure 1 comprises obtaining an indication of a location, and in some cases an orientation, for each robot R1-R6 of the plurality of robots R1-R6. In some examples, the location and in some cases orientation of each robot R1-R6 can comprise a location and in some cases an orientation of the robot R1-R6 relative to an object O1-O4 in the workspace 200 that has a known fixed location in the workspace 200. The object O1-O4 can have a fixed known location and, in some examples, orientation in that the robot control computer stores or otherwise knows or is aware of the location and potentially orientation of the object O1-O4 relative to a mapping of the workspace 200. In some examples, the location and, in some cases orientation, of the robot R1-R6 relative to the object O1-O4 can be obtained from the robot R1-R6 itself. For example, as shown in Figure 2 object O1 can comprise a jig and robots R1, R2, and R3 can provide the robot control computer their location, and in some cases, orientation, relative to the jig O1. This location, and, in some examples, orientation can be determined by, for example, a scanner on robot R1, R2 and R3 detecting the presence of object O1, a distance from object O1 and a direction to object O1. Different robots R1-R6 can provide their location, and in some examples, orientation relative to different objects O1-O4. For example, in the example shown in Figure 2, robots R1-R3 provide their location, and in some cases, orientation relative to object O1 but robots R4 and R5 provide their location and, in some examples, orientation, relative to object O2. In other examples, the location and, in some examples, orientation for each robot R1-R6 can still be relative to an object O1-O4 but the location and, in some examples, orientation, can be provided by a scanner or other object detection system or computer vision system not connected to the robot R1-R6 that provides an indication of the location and, in some examples, orientation, of the robot R1-R6 relative to the object O1-O4.

In further examples, the location and, in some examples, orientation, of the robot R1-R6 can comprise a location and, in some examples, orientation, relative to a known coordinate system. For example, the workspace 200 can comprise a floor grid (not shown) that defines coordinates and the location and, in some examples, orientation, can comprise a location relative to the floor grid. In one example, this location and, in some cases, orientation can comprise a location and, in some cases, orientation that is determined by a scanner or computer vision system that determines how the robot R1-R6 is positioned with respect to the floor grid. In another example, the robot R1-R6 has a code reader such as a QR reader, barcode scanner or other code reader. The robot then scans a code on the floor grid, which can comprise a QR code, barcode or other form of code which provides the indication of the location and, in some examples, orientation. The robot R1-R6 can then send this location and, in some examples, orientation to the robot control computer as the indication of location and, in some examples, orientation.

In some examples, the method can further comprise verifying the location and, in some cases, orientation of the robot R1-R6 before confirming the grouping/assigning of the robots R1-R6 and enabling operation of the robots R1-R6. As such, the method can further comprising receiving from each robot R1-R6 of the plurality of robots R1-R6 a second indication of the current location and, in some examples, current orientation of the robot, comparing the location, and in some examples, orientation from the second indication of the current location with the location and in some examples, orientation from the first indication of the current location and, in some examples, orientation and in response to determining a difference in the location from the first indication and the location from the second indication or a difference in the orientation from the first indication and the orientation from the second indication returning an error indicating there is an error in the positioning of the robot for which there is a difference in the location from the first indication and the location from the second indication or a difference in the orientation from the first indication and the orientation from the second indication. If the location in the first indication of location and the location in the second indication of location agree or are not different and, when orientation is provided, the orientation in the first indication and the orientation in the second indication agree or are not different then the method can comprise confirming that the robot is positioned correctly. This can involve sending a confirmation of the correct positioning of the robot or simply not sending an error indication. The two indications of location and, in some examples, orientation can be obtained in different ways. In some examples, the location and, in some examples, orientation from the first indication of location is determined relative to an object O1-O4, and the location and in some examples, orientation for the second indication can be determined by the robot R1-R6 from a floor grid by scanning a QR code or barcode on the floor grid and obtaining information about the current location and, in some examples, orientation, from the QR code or barcode or vice versa. In other examples, one of the location and, in some examples, orientation in the first indication or the second indication of location may be obtained by GPS while the other of the first indication or the second indication of location and in some examples, orientation, may be obtained relative to an object or via a floor grid. Verifying the location and, in some examples, orientation, by obtaining both a first and second indication of location and, in some examples, orientation for each robot R1-R6 can ensure safety by confirming that the robots R1-R6 are positioned correctly. This reduces the risk of a robot R1-R6 accidentally providing an incorrect indication of location and, in some examples, orientation, which could potentially cause safety issues.

The grouping/assigning of robots into safety zones S1, S2, S3 can be performed dynamically. This means if there is a change in the workspace 200, 400, the method can be reperformed and the robots R1-R6 regrouped or re-assigned as necessary. Thus, in some examples, the method can comprise reperforming the method 100 of Figure 1 in response to determining that the workspace 200 has undergone a change. The change can comprise a robot R1-R6 being added to or removed from the workspace 200, a robot R1-R6 being moved in the workspace 200 not in accordance with an itinerary of planned movements, for example when a robot R1-R6 is moved between safety zones or the planned movements for a robot R1-R6 changes. The changes can also comprise a change in safety boundary for one or more robots R1-R6. The changes can also comprise changes to the workspace 200 that do not comprise a change in the robots R1-R6 for example an object being added to, removed from or moved within the workspace 200.

In response to either receiving an indication of the change or detecting or otherwise determining the change, the method can comprise obtaining a third indication of a current location and, in some examples, orientation of each robot R1-R6 in the workspace 200. In some examples a third indication of a current location and, in some examples, orientation, is obtained for all robots R1-R6 in the workspace 200. In other examples a third indication of current location and, in some examples, orientation is only obtained for robots R1-R6 that have undergone a change in location or orientation by either being added to the workspace 200 or moved within the workspace 200. In these examples if a robot R1-R6 is removed from the workspace 200 an indication of this action can be received to ensure the method no longer considers the removed robot R1-R6 as a robot R1-R6 in the workspace 200. In some examples, the method may comprise obtaining a safety boundary for at least some of the robots R1-R6. For example, a safety boundary can be obtained for either all the robots R1-R6 or for robots R1-R6 that have undergone a change in safety boundary. The safety boundary may be the same for all robots R1-R6 or differ between robots R1-R6. In some examples, a safety boundary is obtained if a change to the workspace 200 comprises a change in safety boundary. In some examples, if no change in safety boundary has occurred a previously obtained safety boundary is used and a new safety boundary is not obtained at this stage. The method also comprises obtaining for each robot R1-R6 of the robots R1-R6 an itinerary of planned movements of the robot R1-R6. While this can be the same itinerary as in step 130 in some examples the manufacture process being performed by the robots R1-R6 will have progressed so this itinerary of planned movements may differ. The method then comprises re-calculating a restricted area for each robot R1-R6 as discussed with respect to stage 140 above. The method then regroups or reassigns the robots R1-R6 as defined in stage 150 above. This enables robots R1-R6 to be regrouped as the workspace 200 changes.

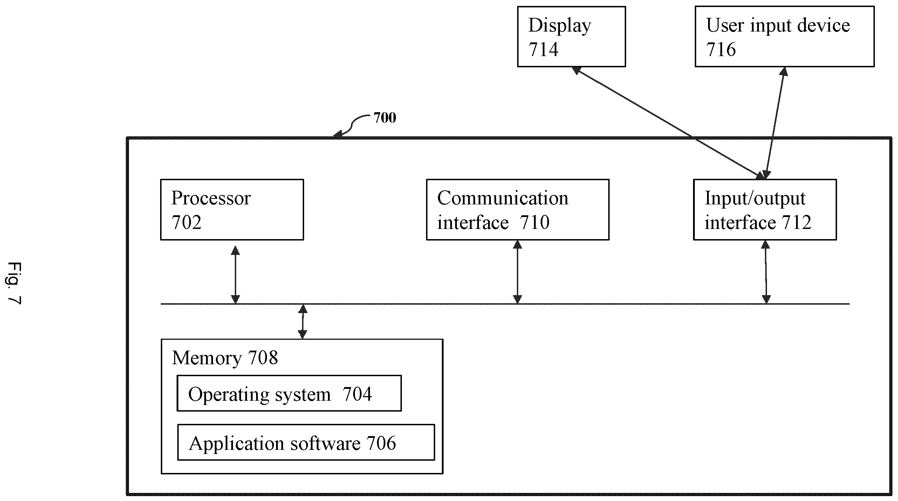

Figure 7 illustrates various components of an exemplary computing-based device 700 which may be implemented as any form of a computing and/or electronic device, and in which embodiments of the above methods may be implemented.

Computing-based device 700 comprises one or more processors 702 which may be microprocessors, controllers or any other suitable type of processors for processing computer executable instructions to control the operation of the device in order to implement the methods described above. In some examples, for example where a system on a chip architecture is used, the processors 702 may include one or more fixed function blocks (also referred to as accelerators) which implement a part of the method of grouping a plurality of robots in hardware (rather than software or firmware). Platform software comprising an operating system 704 or any other suitable platform software may be provided at the computing-based device to enable application software 706 to be executed on the device.

The computer executable instructions may be provided using any computer-readable media that is accessible by computing-based device 700. Computer-readable media may include, for example, computer storage media such as memory 708 and communications media. Computer storage media, such as memory 708, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (memory 708) is shown within the computing-based device 700 it will be appreciated that the storage may be distributed or located remotely and accessed via a network or other communication link (e.g. using communication interface 710).

The computing-based device 700 also comprises an input/output controller interface 712 arranged to output display information to a display device 714 which may be separate from or integral to the computing-based device 700. The display information may provide a graphical user interface. The input/output interface 712 is also arranged to receive and process input from one or more devices, such as a user input device 716 (e.g. a mouse or a keyboard). This user input may be used to receive user commands or instructions to group robots. In an embodiment the display device 714 may also act as the user input device 716 if it is a touch sensitive display device. The input/output interface 712 may also output data to devices other than the display device, e.g. a locally connected printing device, robots being grouped by computing-based device 700, or scanners in an environment containing the robots being grouped by computing-based device 700 (not shown in Figure 7).

The term 'computer' is used herein to refer to any device with processing capability such that it can execute instructions. Those skilled in the art will realize that such processing capabilities are incorporated into many different devices and therefore the term 'computer' includes PCs, servers, mobile telephones, personal digital assistants and many other devices.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

In summary, in examples the present application relates to a method of dynamically grouping/assigning robots within a workspace to ensure safe operation of the robots. In some examples the workspace comprises one robot. In other examples the workspace comprises a plurality of robots. The grouping/assigning is done by obtaining a safety boundary for each robot wherein the safety boundaries can be the same for each robot or differ between robots. The safety boundary represents a distance or area around the robot which is monitored to ensure safe operation of the robot. An indication of the current location of each robot is received, and in some examples, an indication of the current orientation of each robot is received. An itinerary of planned movements for each robot obtained. The safety boundary, current location (and where relevant orientation) and itinerary of planned movement are used to calculate a restricted area for each robot wherein the restricted area is an area defined by the safety boundary for all positions in the current location and itinerary of planned movement. Thus, the restricted area is an area that covers the safety boundary for all positions of the robot from the current location and the itinerary of planned movements. Once the restricted area for each robot has been calculated the restricted areas are used to group the robots or assign the robots to safety zones. In particular, the robots are grouped/assigned into safety zones such that if a robot has a current location in a restricted area of another robot or enters the restricted area of another robot during its itinerary of planned movements, then it is grouped in the same safety zone as the another robot. In addition, each robot in a safety zone containing at least one other robot either has a current location in the restricted area of another robot in the safety zone or enters a restricted area of another robot in the safety zone. This provides an efficient way of grouping/assigning robots that ensures safe grouping/assigning of the robots while avoiding over-grouping the robots. In addition, the method can be used dynamically as required to regroup or re-assign robots.

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of the claims.

## Claims

1. A computer-implemented method (100) of assigning one or more robots (R1-R6; R, T1-T4) in a workspace (200; 400) to one or more safety zones (S1-S3), the method (100) comprising:
obtaining (110) a safety boundary (SB), wherein the safety boundary (SB) defines an area around a robot that needs to be monitored to enable safe operation of the robot;
obtaining (120), for each robot of the one or more robots (R1-R6; R, T1-T4) in the workspace (200; 400), an indication of a current location (CL) of the robot in the workspace (200; 400);
obtaining (130), for each robot of the one or more robots (R1-R6; R, T1-T4) in the workspace (200; 400), an itinerary of planned movements (PM, PM1-PM4) of the robot;
calculating (140), for each robot of the one or more robots (R1-R6; R, T1-T4) in the workspace (200; 400), a restricted area (RA1-RA4) for the robot using the current location (CL) of the robot, the itinerary of planned movement (PM; PM1-PM4) of the robot, and the safety boundary (SB);
assigning (150) the one or more robots (R1-R6; R, T1-T4) to one or more safety zones (S1-S3), such that:
each robot in a safety zone comprising at least one other robot either has a current location (CL) within the restricted area (RA1-RA4) of a robot in the safety zone (S1-S3) or enters the restricted area (RA1-RA4) of a robot in the safety zone (S1-S3) when following its itinerary of planned movement (PM; PM1-PM4); and
any robot that has a current location (CL) within a restricted area (RA1-RA4) of another robot or which enters the restricted area (RA1-RA4) of another robot when followings its itinerary of planned movement (PM; PM1-PM4) is assigned to the same safety zone (S1-S3) as the another robot.

2. The computer-implemented method (100) of claim 1, wherein the one or more robots (R1-R6; R, T1-T4) are assigned to one or more safety zones (S1-S3) such that:
a robot which neither has a current location (CL) within a restricted area (RA1-RA4) of any other robot nor enters the restricted area (RA1-RA4) of any other robot when following its itinerary of planned movement (PM; PM1-PM4) is assigned to an individual safety zone.

3. The computer-implemented method (100) of claim 1 or claim 2 wherein:
the one or more robots (R1-R6; R, T1-T4) comprise a plurality of robots (R1-R6, R, T1-T4);
the one or more safety zones (S1-S3) comprise a plurality of safety zones (S1-S3); and
an area covered by a first safety zone (S1, S2) of the plurality of safety zones (S1-S3) can overlap with an area covered by a second safety zone (S2, S3) of the plurality of safety zones (S1-S3).

4. The computer-implemented method (100) of any previous claim, further comprising, for at least one safety zone of the one or more safety zones (S1-S3):
operating (510) the one or more robots in the safety zone in accordance with their respective itinerary of planned movements (PM; PM1-PM4);
during operation of the one or more robots in the safety zone, determining (520) whether an object enters the safety zone; and
in response to determining an object has entered the safety zone, stopping (530) operation of all of the one or more robots in the safety zone.

5. The computer-implemented method (100) of any previous claim, further comprising, for at least one safety zone of the one or more safety zones (S1-S3):
determining (610), using the restricted area for each robot in the safety zone, a total area of the safety zone;
determining (620) any scanners present within the total area of the safety zone, wherein the scanners are configured to scan the workspace;
determining (630), for each scanner in the total area of the safety zone, a detectable scanning area for the scanner, wherein the detectable scanning area takes into account any objects in the workspace restricting the detectable scanning area of the scanner;
determining (640), using the detectable scanning area for each scanner, a total area detectable by all the scanners in the safety zone;
comparing (650) the total area detectable to the total area of the safety zone; and
in response to the total area detectable not covering the entire area of the safety zone, providing (660) a warning that the safety zone is insufficiently served by scanners; else
in response to the total area detectable covering at least the entire area of the safety zone, confirming (670) the assigning of the one or more robots in the safety zone to the safety zone.

6. The computer-implemented method (100) of claim 5, wherein:
determining (610), using the restricted area (RA1-RA4) for each robot in the safety zone, a total area of the safety zone comprises using polygon clipping to add the restricted area (RA1-RA4) for each robot in the safety zone to obtain the total area for the safety zone;
determining (640), using the detectable scanning area for each scanner, a total area detectable by all the scanners in the safety zone comprises using polygon clipping to add the detectable scanning area for each scanner in the safety zone to obtain the total area detectable by all scanners in the safety zone; and
comparing (650) the total area detectable to the total area of the safety zone comprises using polygon clipping to determine if any part of the total area of the safety zone is outside of the total area detectable.

7. The computer-implemented method (100) of claim 5 or claim 6, further comprising, in response to the total area detectable not covering the entire area of the safety zone:
using the area of the safety zone and the total area detectable determining an undetectable area that is not detectable by any of the scanners in the safety zone;
determining based on the undetectable area suggestions on how additional scanners should be positioned in the safety zone to ensure the entire area of the safety zone is detectable by a scanner; and
providing an output containing the suggestions as to how additional scanners should be positioned.

8. The computer-implemented method (100) of any previous claim, wherein the indication of the current location (CL) of the robot is a first indication of a current location (CL) of the robot, and the method further comprises:
receiving, from each robot of the one or more robots (R1-R6; R, T1-T4), a second indication of the current location (CL) of the robot; and
for each robot of the one or more robots (R1-R6; R, T1-T4):
comparing, the location from the second indication of the current location (CL) with the location from the first indication of the current location (CL); and
in response to the location from the second indication being different from the location from the first indication, providing an indication that there is an error in the positioning of the robot; else
in response to the location from the second indication not being different from the location from the first indication confirming the robot is correctly positioned.

9. The computer-implemented method (100) of claim 8 wherein:
the first indication of a current location (CL) of the robot in the workspace (200; 400) is a location of the robot relative to an object (O1-O4) in the workspace (200; 400), wherein the object in the workspace has a known position; and the method (100) further comprises:
determining, by each robot of one or more robots (R1-R6; R, T1-T4), the current location (CL) of the robot by scanning a QR code on a floor grid, wherein the robot is positioned on the floor grid; and
providing the current location (CL) obtained from the QR code on the floor grid as the second indication of the location.

10. The computer-implemented method (100) of any previous claim, further comprising, in response to a change in the workspace:
obtaining (110), for each robot of the one or more robots (R1-R6; R, T1-T4) in the workspace (200; 400), a third indication of a current location (CL) of the robot in the workspace (200; 400);
obtaining (130), for each robot of the one or more robots (R1-R6; R, T1-T4) in the workspace, an itinerary of planned movements (PM1-PM4) of the robot;
for each robot re-calculating (140) a restricted area for the robot using the current location (CL) of the robot, the itinerary of planned movement (PM1-PM4) of the robot, and the safety boundary (SB);
re-assigning (150) the one or more robots (R1-R6; R, T1-T4) into one or more safety zones (S1-S3) such:
each robot in a safety zone comprising at least one other robot either has a current location (CL) within the restricted area (RA1-RA4) of a robot in the safety zone or enters the restricted area (RA1-RA4) of a robot in the safety zone when following its itinerary of planned movement (PM1-PM4); and
any robot that has a current location (CL) within a restricted area (RA-RA4) of another robot or which enters the restricted area (RA1-RA4) of another robot when followings its itinerary of planned movement (PM1-PM4) is assigned to the same safety zone as the another robot.

11. The computer-implemented method (100) of claim 10, wherein the change in the workspace (200; 400) comprises at least one of:
a new robot being added to the workspace (200; 400);
a robot being removed from the workspace (200; 400);
a robot being moved within the workspace (200; 400);
an object being added to the workspace (200; 400);
an object being removed from the workspace (200; 400);
an object being moved within the workspace (200; 400); and
a change in safety boundary for one or more robots of the one or more robots (R1-R6; R, T1-T4).

12. The computer-implemented method (100) of any previous claim, wherein either:
the safety boundary (SB) is a predefined value that is the same for each robot of the one or more robots; or
obtaining (120) a safety boundary (SB) comprises obtaining the safety boundary for each robot of the one or more robots (R1-R6; R, T1-T4) and wherein the size of the safety boundary (SB) can differ between robots.

13. A computer device comprising:
a processor; and
a memory, the memory containing computer readable instructions that when implemented by the processor cause the processor to perform a method (100) according to any of claims 1 to 12.

14. A non-transitory computer readable storage medium containing instructions that when implemented by a processor cause the processor to perform a method (100) according to any of claims 1 to 12.

15. A robot assembly system comprising:
one or more robots (R1-R6; R, T1-T4) in a workspace (200; 400), wherein each robot of the one or more robots is configured to send, to a robot control computer, an indication of a current location of the robot in the workspace (200; 400) in response to a location request received from the robot control computer; and
the robot control computer, wherein the robot control computer comprises:
a processor; and
a memory, the memory containing computer implementable instructions that when implemented by the processor cause the processor to perform a method (100) accord to any of claims 1 to 12.
